# EUROPÄISCHE PATENTSCHRIFT

(11) **EP 0 414 016 B1**
(45) Veröffentlichungstag und Bekanntmachung des Hinweises auf die Patenterteilung: **28.06.1995**
(21) Anmeldenummer: 90115011.0
(22) Anmeldetag: 04.08.1990
(51) Int. Cl.: H04N 7/32

(54) **Verfahren zur Bildung eines Prädiktionsbildes**
Method for forming prediction pictures
Procédé pour former les images de prédiction

(30) Priorität: 21.08.1989 DE 3927516
(43) Veröffentlichungstag der Anmeldung: 27.02.1991
(73) Patentinhaber: ANT Nachrichtentechnik GmbH, D-71522 Backnang (DE)
(72) Erfinder: Stiller, Christoph, Dipl.-Ing., D-5100 Aachen (DE)

(56) Entgegenhaltungen:
- WO-A-80/01976
- FREQUENZ:ZEITSCHRIFT FüR TELEKOMMUNIKATION Bd. 43, Nr. 5, Mai 1989, BERLIN, DE Seiten 126 - 133; GILGE ET AL: 'Codierung von farbigen Bewegtbildszenen mit 64 kbit/s - Ein neuer Ansatz zur Verwirklichung eines Bildtelefons im ISDN (Teil lll)'
- IEEE TRANSACTIONS ON PATTERN ANALYSIS AND MACHINE INTELLIGENCE Bd. 11, Nr. 7,Juli 1989, NEW YORK, US Seiten 742 - 748; STROBACH: "Quadtree-Structured Linear Prediction Models for Image Sequence Processing"
- PATENT ABSTRACTS OF JAPAN vol. 11, no. 312 (E-548)(2759) 12. Oktober 1987 & JP-A-62 104 387

## Beschreibung

Die Erfindung geht aus von einem Verfahren zur Bildung eines Prädiktionsbildes unter Berücksichtigung einer Bildbewegung zwischen einem aktuellen Bild und einem zeitlich davorliegenden Bild.

Bei üblichen Bewegtbildcodern wird das Bild in quadratische Teilbildbereiche (Blöcke), z.B. der Größe 16 x 16 Bildpunkte, unterteilt und die Bewegung zum nächsten Bild für jeden dieser Blöcke ermittelt. Dadurch ergibt sich ein Bewegungsvektorfeld, welches codiert wird. Sender und Empfänger erzeugen ein Prädiktionsbild, indem jeder Block aus dem vorhergehenden Bild entsprechend dem zugehörigen Bewegungsvektor verschoben wird (DE 37 04 777 C1).

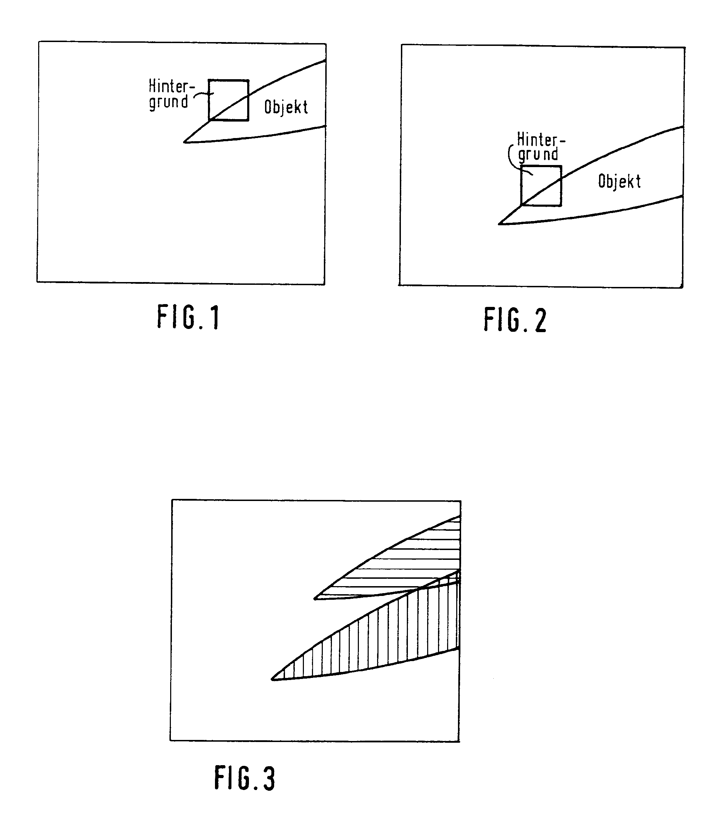

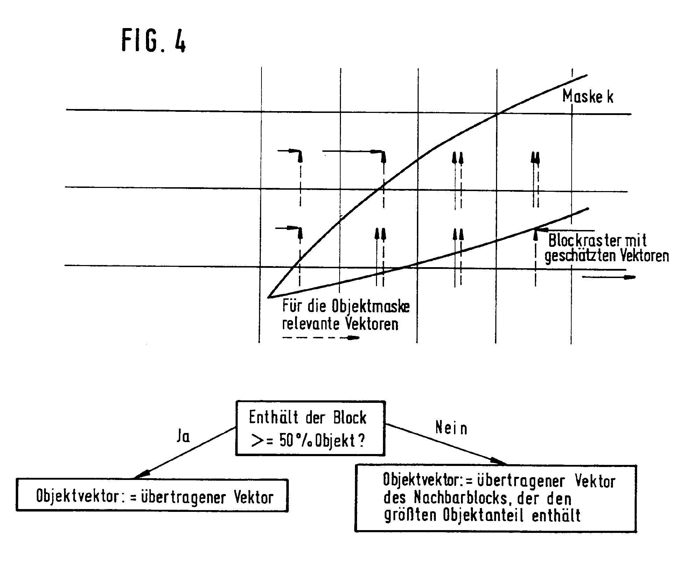

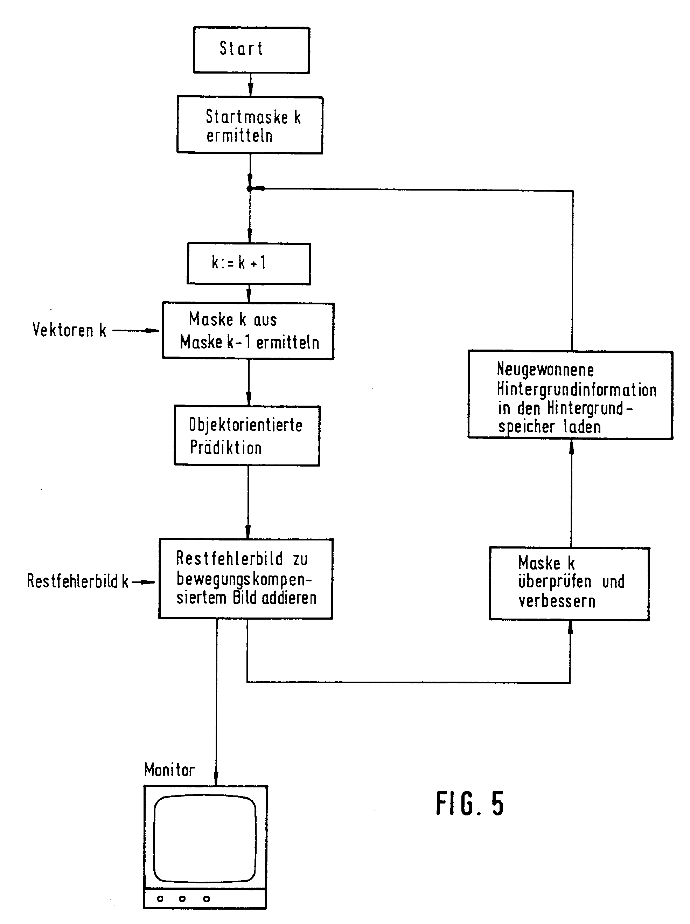

Enthält ein Block sowohl bewegten Bildanteil (Objekt) als auch unbewegten Bildanteil (Hintergrund), so kann der Bewegungsvektor nur die Bewegung eines der beiden Teile beschreiben. Der andere Teil wird dennoch mit diesem Bewegungsvektor verschoben, wodurch in diesem Bereich ein fehlerhaftes Prädiktionsbild entsteht. Meist wird, wie in den Figuren 1 und 2 dargestellt, der Hintergrund in der Nähe des Objektes auf diese Weise mitbewegt. Die Figuren 1 und 2 zeigen zwei aufeinanderfolgende Bilder, wobei Figur 2 das aktuelle Bild k und Figur 1 ein zeitlich davor liegendes Bild k-1 darstellt. Für einen Block, der sowohl Objekt als auch Hintergrund enthält, ist in Figur 2 beispielhaft das fehlerhafte Mitverschieben des Hintergrundes in der Umgebung eines Objektes dargestellt.

Aus Frequenz: Zeitschrift für Telekommunikation Bd 43, Nr. 5, Mai 1989, Berlin, Seiten 126-133; Gilge et al "Codierung von Bewegtbildszenen mit 64 kbit/s" werden Verfahren mit wachsendem Bildaufbau vorgestellt. Bei einem in Kap. 6.2. beschriebenen bewegungsadaptiven Verfahren werden ausgelassene Bilder im Empfänger durch bewegungsadaptive Interpolation rekonstruiert. Dazu werden Schätzbilder aufgrund von Bewegungsvektorfeldern erstellt. Bei der Interpolation wird zwischen bewegtem Objekt, festem Hintergrund, freiwerdendem oder verdecktwerdendem Hintergrund unterschieden und es werden für diese verschiedenen Fälle unterschiedliche Binär-Masken generiert. In diese Masken werden entweder Interpolationsergebnisse oder Informationen aus tatsächlich übertragenen Bildern eingesetzt. Kleine Bewegungsergebnisse werden unterdrückt.

In Kap. 7 wird ausgeführt, daß dieses Verfahren verbessert werden kann durch Ausnutzung der Korrelation zwischen Bewegungsinformation und Restfehlercodierung. Als Alternative zur Verarbeitung von Bildblöcken wird die Verwendung bildinhaltsangepaßter Segmente empfohlen.

Aufgabe vorliegender Erfindung ist es ein Verfahren zur Bildung eines verbesserten Prädiktionsbildes anzugeben. Diese Aufgabe wird durch die Merkmale des Patentanspruchs 1 gelöst. Die weiteren Ansprüche zeigen Weiterbildungen des Verfahrens auf, bzw. eine Anwendung des Verfahrens.

Das Prädiktionsbild, das nach dem Verfahren der Erfindung erstellt wird, ist insbesondere an den Übergängen zwischen bewegtem Bildanteil (Objekt) und statischem Hintergrund verbessert, da nur jene Teile eines Blockes mittels eines zugehörigen Bewegungsvektors verschoben werden, die bewegten Bildanteil enthalten. Durch die Aufbereitung einer Objektmaske werden neben der Verbesserung des Prädiktionsbildes noch folgende Verbesserungen bei der Bildcodierung erreicht:
Häufig wird von Bewegtbildcodern die Bildsequenz unterabgetastet. Die ausgelassenen Zwischenbilder werden dann im Empfänger bewegungsabhängig interpoliert. Mit der Objektmaske kann der bewegte Bildinhalt unabhängig vom Hintergrund verschoben werden. Außerdem kann mit Hilfe der Objektmaske das Bewegungsvektorfeld prädiktiv und damit effizienter codiert werden, indem alle im Hintergrund liegenden Vektoren zu Null gesetzt und im Objekt liegende Vektoren gleich einem benachbarten Objektvektor prädiziert werden. Dies führt zur Einsparung an Codelänge bei der Bildcodierung.

Anhand der weiteren Zeichnungen wird die Erfindung nun naher erläutert. Es zeigen
Figur 3 die Objektmaske für zwei zeitlich aufeinanderfolgende Bilder,
Figur 4 Blöcke mit dazugehörigen Bewegungsvektoren im Bereich der Objektmaske,
Figur 5 ein Ablaufdiagramm zur Ermittlung der Objektmaske,
Figur 6 ein Blockschaltbild für die sender- und empfängerseitige Aufbereitung des Prädiktionsbildes.

Figur 3 zeigt eine Objektmaske, d.h. einen Bereich, welcher für jedes Bild Lage und Ort des bewegten Bildanteils beschreibt, für ein aktuelles Bild k (vertikal schraffiert) und eine Objektmaske für ein zeitlich davor liegendes Bild k-1 (horizontal schraffiert). Im einfachsten Fall kann eine solche Objektmaske durch ein Binärbild dargestellt werden, welches den Wert "1" genau dort besitzt, wo sich bewegter Bildanteil befindet und den Wert "0", wo statischer Hintergrund vorliegt. Wie eine solche Objektmaske ermittelt werden kann, wird später noch erläutert.

Das Bild wird zuerst in Blöcke zerlegt. Eine solche Blockzerlegung an sich ist aus zahlreichen Veröffentlichungen bekannt, beispielsweise aus DE 37 04 777 C1 oder aus Esprit 86, The Commission of the European Communities, Directorate General XII, Telecommunications, Information, Industry & Innovation, Elsevier Science Publishers B.V., Amsterdam, NL, 1987, Seite 416, so daß auf die Einzelheiten hier nicht näher eingegangen werden muß. Anschließend werden blockweise die Bewegungsvektoren für zueinander gehörige Blöcke aus einem davor liegenden und dem aktuellen Bild ermittelt. Diese Ermittlung der Bewegungsvektoren ist ebenfalls aus der DE 37 04 777 C1 bekannt.

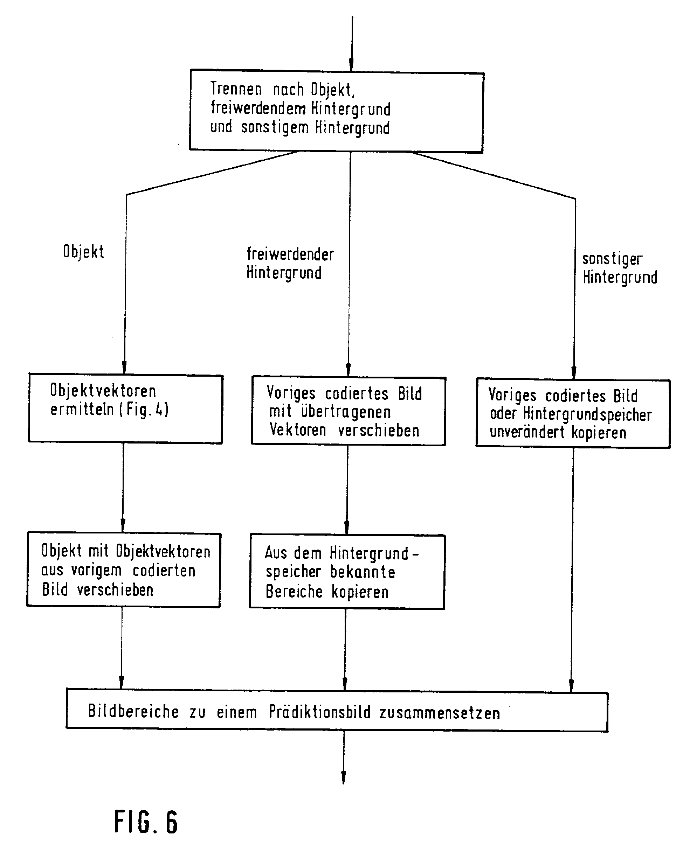

Zunächst wird erläutert, wie das Prädiktionsbild bei vorhandener Objektmaske erstellt wird: Das Bild wird anhand der Objektmaske nach den folgenden drei Teilbereichen unterschieden und jeder dieser Teilbereiche wird unterschiedlich prädiziert (Figur 6).
a) Objekt k (Objektmaske k)
   Im einfachsten Fall wird in diesem Bereich jeder Block entsprechend des zugehörigen Bewegungsvektors verschoben Figur 4 zeigt als Blöcke quadratische Blocke mit ihren durch Pfeile dargestellten Bewegungsvektoren). Von jedem Block wird jedoch nur der Anteil auf diese Weise prädiziert, der in der Objektmaske liegt, d.h. der Anteil, für den die Objektmaske den Wert "1" enthält.
   Liegt ein Block nur zu einem kleinen Teil in der Objektmaske (z.B. weniger als 50 Prozent), so ist bei den meisten Bewegungsschätzverfahren wahrscheinlich, daß der Bewegungsvektor nicht die Bewegung des Hintergrunds beschreibt. Der zugehörige Bewegungsvektor wäre also der Nullvektor. Daher wird für einen solchen Block überprüft, ob einer der vier Nachbarblöcke einen größeren Anteil am Objekt aufweist. Dann wird der Vektor desjenigen Nachbarblocks, der den größten Anteil im Objekt liegen hat, für den betrachteten Block gewählt. Dieser Block hat am wahrscheinlichsten einen Bewegungsvektor, der die Bewegung des Objekts beschreibt. Auch hier wird von jedem Block nur der Anteil, der in der Objektmaske k liegt, auf diese Weise prädiziert. Die für die Objektmaske relevanten Bewegungsvektoren (Figur 6 - Objektvektoren) sind in Figur 4 gestrichelt und die für das Blockraster geschätzten Bewegungsvektoren durchgezogen dargestellt.
b) Freiwerdender Hintergrund (Objektmaske k-1 aber nicht Objektmaske k)
   Für den Hintergrund wird ein Bildspeicher (Figur 6) verwendet, in den bekannter Hintergrund eingeschrieben wird. Ist der freiwerdende Hintergrund in diesem Hintergrundspeicher bekannt, so wird er aus diesem Speicher kopiert. Der restliche, im Hintergrundspeicher unbekannte Teil des freiwerdenden Hintergrunds wird prädiziert, indem jeder Block gemäß des zugehörigen Vektors aus dem vorhergehenden Bild verschoben wird.
c) Sonstiger Hintergrund (weder Objektmaske k-1 noch Objektmaske k)
   Der sonstige Hintergrund wird aus Bild k-1 unverändert für das Prädiktionsbild übernommen, oder aus dem Hintergrundspeicher kopiert.

Die unterschiedlichen Bildbereiche a), b) und c) werden dann zu einem Prädiktionsbild zusammengesetzt (Figur 6).

Das Verfahren gemäß der Erfindung läßt sich vorteilhaft zur Interpolation ausgelassener Zwischenbilder verwenden. Dazu werden für die unbewegte Hintergrundinformation alle Bewegungsvektoren zu Null und die innerhalb der Objektmaske liegenden Bewegungsvektoren entsprechend des zeitlichen Abstandes zwischen übertragenen und interpolierten Bildern skaliert. Die interpolierten Zwischenbilder werden wie die Prädiktionsbilder erstellt.

Die Schritte zur Ermittlung einer aktuellen Objektmaske auf der Empfängerseite sind in Figur 5 in einem Ablaufdiagramm dargestellt. Ausgehend von einer beliebigen Startmaske (z.B. einer Maske, die überall den Wert "0" hat),wird die aktuelle Objektmaske k im einfachsten Fall dadurch ermittelt (prädiziert), daß die zeitlich davor liegende Objektmaske k-1 blockweise entsprechend der Bewegungsvektoren verschoben wird. Auf diese Weise erhalt man eine Prädiktion für die aktuelle Objektmaske. Dann wird das Prädiktionsbild k wie zuvor beschrieben konstruiert (Figur 4). Der Sender ermittelt das Restfehlerbild (Differenz zwischen Originalbild und Prädiktionsbild) und codiert es.

Mit dieser Zusatzinformation aus dem Restfehlerbild wird die Objektmaske wie folgt in zwei Schritten aufbereitet; d.h. ausgehend von der prädizierten aktuellen Objektmaske wird die aktuelle Objektmaske wie nachfolgend beschrieben verbessert, wobei zum Einsparen von Rechenleistung auch einer der Schritte entfallen kann.
1. Schritt:
   Der im Hintergrundspeicher bekannte statische Hintergrund wird mit demselben Bewegungsvektorfeld, mit dem auch das Prädiktionsbild erstellt wurde, verschoben. Dieser verschobene Hintergrund wird mit dem Prädiktionsbild verglichen. Für Segmente, in denen nur ein geringfügiger Unterschied besteht und die in der aktuellen Objektmaske liegen, wird im folgenden überprüft, ob sie aus der aktuellen Objektmaske herausgenommen werden sollten. Hierfür wird die Differenzleistung zwischen dem Prädiktionsbild und dem codierten Bild (Prädiktionsbild plus Restfehlerbild) segmentweise mit der Differenzleistung zwischen dem im Hintergrundspeicher enthaltenen Hintergrund und dem codierten Bild verglichen. Die Segmente, für die die letztere Differenzleistung kleiner ist, werden aus der aktuellen Objektmaske genommen, d.h. zu "0" gesetzt, die anderen Segmente verbleiben in der aktuellen Objektmaske.
2. Schritt:
   Der Empfänger faßt die Bildbereiche, an denen ein besonders großer Fehler im Restfehlerbild codiert werden mußte, zu Fehlersegmenten zusammen. Für jedes dieser Fehlersegmente wird überprüft, ob sich die Leistung des Restfehlerbildes verkleinert, wenn die aktuelle Objektmaske in diesem Segment geändert wird. Dafür wird das Prädiktionsbild konstruiert, welches sich ergibt, wenn der Wert der aktuellen Objektmaske für die Fehlersegmente zu "1" gesetzt wird und das Prädiktionsbild konstruiert, welches sich ergibt, wenn der Wert der aktuellen Objektmaske für die Fehlersegmente zu "0" gesetzt wird. Für beide Prädiktionsbilder wird die Differenz zum codierten Bild (Prädiktionsbild plus Restfehlerbild) errechnet. Die Leistung dieser beiden Differenzbilder, also die Restfehlerbildleistung, wird für jedes Fehlersegment verglichen. Falls die Verbesserung (Minimierung) der Restfehlerbildleistung größer ist als die Rauschleistung, so wird der Wechsel in der Objektmaske vorgenommen, d.h. das Segment wird neu in die Objektmaske genommen bzw. aus ihr entfernt. Zuletzt werden Objekte, welche nur aus wenigen Bildpunkten bestehen, aus der Objektmaske entfernt.

Die Codierung für die Bildübertragung kann auf herkömmliche Weise erfolgen, z.B. durch DCT (discrete corine transform) und nachfolgender Aufbereitung, wie beispielsweise in der DE 37 04 777 C1 beschrieben.

## Patentansprüche

1. Verfahren zur Bildung eines Prädiktionsbildes unter Berücksichtigung einer Bildbewegung zwischen einem aktuellen Bild und einem zeitlich davor liegenden Bild mit folgenden Verfahrensschritten:
a) Bereitstellen einer beliebigen Startobjektmaske, z.B. eines Binärbilds, welches überall den Wert Null hat, als Objektmaske,
b) Zerlegen der Bilder in Blöcke,
c) blockweises Ermitteln der Bewegungsvektoren für zueinander gehörige Blöcke aus einem davor liegenden und dem aktuellen Bild,
d) Prädiktion einer aktuellen Objektmaske (k), welche für jedes Bild Lage und Ort des bewegten Bildanteils beschreibt, indem die zuvor ermittelte Objektmaske (k-1) - im Falle der Erstermittlung die Startmaske - anhand der ermittelten Bewegungsvektoren verschoben wird,
e) Erstellen eines Prädiktionsbildes getrennt nach Objekt, freiwerdendem Hintergrund und sonstigem Hintergrund,
f) für Blöche, die einen Anteil im Objekt haben: Prüfen, ob ein Block zu weniger als 50 % in der Objektmaske liegt und für solche Blöcke prüfen, ob einer der Nachbarblöcke dieses Blocks zu 50 % oder mehr als 50 % in der Objektmaske liegt, falls einer der Nachbarblöcke zu 50 % oder mehr als 50 % in der Objektmaske (k) liegt, Auswählen des Bewegungsvektors desjenigen Nachbarblocks anstelle des zu weniger als 50 % in der Objektmaske (k) liegenden Blocks, der 50 % oder mehr als 50 % mit der Objektmaske (k) gemeinsam hat, Verschieben des Objekts aus dem vorherigen codierten Bild mit den so bestimmten Bewegungsvektoren zu einem Prädiktionsbild,
g) Verschieben des freiwerdenden Hintergrundes mit den unveränderten Bewegungsvektoren unter Verwendung des vorherigen Bildes und der im Restfehlerbild enthaltenen Zusatzinformation, wobei das Restfehlerbild aus der Differenz zwischen Originalbild und einem Prädiktionsbild gewonnen ist,
h) unverändertes Übernehmen des sonstigen Hintergundes aus dem vorherigen Bild,
i) Verbessern der prädizierten aktuellen Objektmaske im Sinne einer Minimierung der Restfehlerbildleistung aufgrund der im Restfehlerbild enthaltenen Zusatzinformation.

2. Verfahren nach Anspruch 1, gekennzeichnet durch Prädiktion der Hintergrundinformation, d.h. Bildanteile außerhalb der Objektmaske, nach folgenden Schritten:
- Hintergrundinformation, die weder im davor liegenden Bild noch im aktuellen Bild von der Objektmaske (k) überdeckt ist, wird unverändert in das Prädiktionsbild übernommen,
- Hintergrundinformation, die im zeitlich davorliegenden Bild, jedoch nicht im aktuellen Bild von der Objektmaske (k) bedeckt ist, wird - falls sie zuvor einmal sichtbar war und in einem Speicher abgespeichert worden ist - aus diesem Speicher kopiert, andernfalls wird sie prädiziert, indem jeder Block gemäß des zugehörigen Bewegungsvektors aus dem zeitlich davor liegenden Bild verschoben wird.

3. Verfahren nach einem der Ansprüche 1 bis 2, gekennzeichnet durch folgende empfangsseitige Erstellung der Objektmaske:
- Bereitstellen einer Startobjektmaske, z.B. einer Objektmaske in Form eines Binärbildes, welches überall den Wert Null hat,
- Ermitteln des Restfehlerbildes durch Differenzbildung zwischen Originalbild und Prädiktionsbild,
- Codieren und Übertragen des Prädiktionsbildes in Form von Bewegungsvektoren sowie des Restfehlerbildes,
- Zusammenfassen jener Bildbereiche nach dem Übertragen, an denen sich die Restfehlerbildleistung verkleinert, wenn die aktuelle Objektmaske dort geändert wird, zu Fehlersegmenten,
- Erstellen eines ersten Prädiktionsbildes, welches sich ergibt, wenn der Wert der Objektmaske (k) für die Fehlersegmente so gewählt wird, z.B. "1", daß bewegter Bildanteil angenommen wird,
- Erstellen eines zweiten Prädiktionsbildes, welches sich ergibt, wenn der Wert der Objektmaske (k) für die Fehlersegmente so gewählt wird, z.B. "0", daß unbewegter Bildanteil angenommen wird,
- Bilden der Differenz zwischen dem codierten und übertragenen Prädiktionsbild und Restfehlerbild und jeweils dem ersten und zweiten Prädiktionsbild,
- Fehlersegmentweises Vergleichen dieser Differenzbilder bezüglich der Restfehlerbildleistung,
- Fehlersegmentweises Ändern der Objektmaske (k), d.h. Hinzufügen eines jeweiligen Fehlersegments zur Objektmaske (k) bzw. Entfernen des jeweiligen Fehlersegments aus der Objektmaske (k), wenn sich die Leistung des Restfehlerbildes dann verringert.

4. Verfahren nach Anspruch 3, dadurch gekennzeichnet, daß eine Änderung der Objektmaske (k) nur dann vorgenommen wird, wenn die Verringerung der Restfehlerbildleistung noch über der Rauschleistung liegt.

5. Verfahren nach Anspruch 3 oder 4, dadurch gekennzeichnet, daß Objekte, die nur aus wenigen Bildpunkten bestehen, aus der Objektmaske (k) entfernt werden.

6. Verfahren nach einem der Ansprüche 1 bis 5, dadurch gekennzeichnet, daß die Objektmaske (k) zusätzlich anhand der in einem Hintergrundspeicher enthaltenen Information wie folgt aufbereitet wird:
- Erstellen eines Bildes, indem der Inhalt des Hintergrundspeichers in jedem Bildpunkt mit demselben Bewegungsvektor verschoben wird, mit dem das Prädiktionsbild erstellt wurde,
- Vergleichen dieses Bildes mit dem Prädiktionsbild und Zusammenfassen der ähnlichen Bildbereiche zu Segmenten,
- Entfernen von Segmenten, die nur aus wenigen Bildpunkten bestehen,
- Entfernen der Bildpunkte aus den Segmenten, in denen die Objektmaske (k) den Wert Null aufweist,
- Segmentweises Vergleichen des codierten übertragenen Bildes mit der Information des Hintergrundspeichers und Herausnehmen aller ähnlichen Segmente aus der Objektmaske (k).

7. Anwendung des Verfahrens nach einem der Ansprüche 1 bis 5 zur Interpolation ausgelassener Zwischenbilder, indem für die unbewegten Hintergrundinformation alle Bewegungsvektoren zu Null und die innerhalb der Objektmaske (k) liegenden Bewegungsvektoren entsprechend des zeitlichen Abstands zwischen übertragenen und interpolierten Bildern skaliert werden und interpolierte Zwischenbilder wie Prädiktionsbilder gemäß den Merkmalen e) bis h) des Anspruchs 1 erstellt werden.

## Claims

1. Method of forming a prediction image taking into account an image movement between an actual image and an image preceding that in time, comprising the following method steps:
**a)** preparing an arbitrary starting object mask, for example of a binary image, which overall has the value zero, as object mask,
**b)** breaking down of the images into blocks,
**c)** determining the movement vectors block-by-block for the mutually associated blocks from a preceding and the actual image,
**d)** prediction of an actual object mask (k) which describes the position and place of the moved image portion for each image, so that the previously determined object mask (k-1) - in the case of first determining of the starting mask - is displaced on the basis of the ascertained movement vectors,
**e)** setting up of a prediction image separated according to object, background becoming free and remaining background,
**f)** for blocks which have a portion in the object: checking whether a block lies less than 50% in the object mask and checking for such blocks whether one of the blocks adjacent to that block lies at 50% or more than 50% in the object mask (k), in the case that one of the adjacent blocks lies at 50% or more than 50% in the object mask (k) selecting the movement vector of that adjacent block, instead of the block lying less than 50% in the object mask (k), which has 50% or more than 50% in common with the object mask (k), and shifting the object from the previously coded image by the thus determined movement vectors to a predicition image,
**g)** shifting the background becoming free by the unchanged movement vectors with use of the previous image and of the additional information contained in the residual error image, wherein the residual error image is obtained from the difference between original image and a prediction image,
**h)** taking over unchanged the remaining background from the previous image, and
**i)** enhancing the predicted actual object mask in the sense of a minimising of the residual error image output on the basis of the additional information contained in the residual error image.

2. Method according to claim 1, characterised by prediction of the background information, i.e. image portions outside the object mask, according to the following steps:
- background information, which is not concealed by the object mask (k) either in the preceding image or in the actual image, is taken over unchanged into the prediction image, and
- background information, which is covered by the object mask (k) in the image preceding in time but not in the actual image, is - in the case that it was previously once visible and has been stored in a store - copied out of this store, otherwise it is predicted in that each block is shifted out of the image preceding in time in accordance with the associated movement vector.

3. Method according to one of claims 1 to 2, characterised by the following setting up of the object mask at the receiver side:
- preparing a starting object mask, for example an object mask in the form of a binary image, which overall has the value zero,
- determining the residual error image through difference formation between original image and prediction image,
- coding and transferring the prediction image into the form of movement vectors as well as the residual error image,
- combining those image regions, after the transfer, at which the residual error image output diminishes if the actual object mask is changed there, into error segments,
- setting up a first prediction image which results when the value of the object mask (k) for the error symbols is so selected, for example "1", that a moved image portion is assumed,
- setting a second prediction image which results when the value of the object mask (k) for the error segments is so selected, for example "0", that an unmoved image portion is assumed,
- forming the difference between the coded and transferred prediction image and residual error image and each time the first and second prediction image,
- comparing these difference images error segment by error segment with respect to the residual error image output, and
- changing the object mask (k) error segment by error segment, i.e. adding a respective error segment to the object mask (k) or removing the respective error segments from the object mask (k), if the output of the residual error image then reduces.

4. Method according to claim 3, characterised thereby that a changing of the object mask (k) is undertaken only if the reduction in the residual error image output still lies above the noise output.

5. Method according to claim 3 or 4, characterised thereby that objects which consist only of small image points are removed from the object mask (k).

6. Method according to one of claims 1 to 5, characterised thereby that the object mask (k) is additionally prepared on the basis of information contained in a background store as follows:
- setting up an image in that the content of the background store is displaced in each image point by the same movement vector by which the prediction image was set up,
- comparing this image with the prediction image and combining the similar image regions into segments,
- removing segments which consist only of small image points,
- removing the image points from the segments in which the object mask (k) has the value zero, and
- comparing the coded and transferred image segment by segment with the information of the background store and taking all similar segments out of the object mask (k).

7. Use of the method according to one of claims 1 to 5 for interpolation of omitted intermediate images, in that, for the unmoved background information, all movement vectors are scaled to zero and the movement vectors lying within the object mask (k) are scaled in accordance with the time spacing between transferred and interpolated intermediate images, and interpolated images are set up as prediction images according to the features e) to h) of claim 1.

## Revendications

1. Procédé de formation d'une image de prédiction en tenant compte d'un déplacement de l'image entre une image actuelle et une image antérieure, avec les pas de procédé suivants:
a) disposer d'un masque-objet de départ quelconque, par exemple d'une image binaire qui présente partout la valeur zéro comme masque-objet,
b) décomposer les images en blocs,
c) déterminer, bloc par bloc, les vecteurs de déplacement pour les blocs qui se correspondent, à partir de l'image actuelle et d'une image antérieure,
d) prédire un masque-objet actuel k qui, pour chaque image, décrit la position de la portion mobile de l'image, en ce sens qu'à l'aide des vecteurs de déplacement déterminés, on décale le masque-objet (k-1) précédemment déterminé - dans le cas de la première détermination, le masque de départ,
e) établir séparément une image de prédiction selon l'objet, I'arrière-plan devenant exposé et l'autre arrière-plan,
f) pour les blocs qui ont une certaine proportion dans l'objet: vérifier si un bloc se trouve à moins de 50% dans le masque-objet et, pour ce bloc, vérifier si l'un des blocs voisins de ce bloc se trouve à 50%, ou plus de 50% dans le masque-objet, dans le cas où l'un des blocs voisins se trouve à 50% ou plus de 50% dans le masque-objet (k), choisir, au lieu du vecteur de déplacement du bloc qui se trouve à moins de 50% dans le masque-objet (k), celui du bloc voisin qui a en commun avec le masque-objet (k) 50% ou plus de 50%, décaler l'objet, à partir de l'image antérieure codée, avec les vecteurs de déplacement ainsi déterminés, pour donner une image de prédiction,
g) décaler l'arrière-plan, devenant exposé, avec les vecteurs de déplacement non modifiés, en employant l'image antérieure et l'information complémentaire contenue dans l'image d'erreur résiduelle, l'image d'erreur résiduelle s'obtenant à partir de la différence entre l'image originale et une image de prédiction,
h) récupérer, sans le modifier, le reste de l'arrière-plan à partir de l'image antérieure,
i) améliorer le masque-objet actuel prédit au sens de rendre minimale la valeur de l'image d'erreur résiduelle sur la base de l'information complémentaire contenue dans l'image d'erreur résiduelle.

2. Procédé selon la revendication 1, caractérisé par la prédiction de l'information concernant l'arrière-plan, c'est-à-dire les portions de l'image qui se trouvent en dehors du masque-objet, selon les pas suivants:
- on prélève, sans la modifier, dans l'image de prédiction l'information comprenant l'arrière-plan qui n'est caché par le masque-objet (k) ni dans l'image antérieure, ni dans l'image actuelle,
- on copie en mémoire l'information concernant l'arrière-plan qui est caché par le masque-objet (k) dans l'image antérieure mais non dans l'image actuelle - dans le cas où il était précédemment visible et a été mémorisé en mémoire, sinon on le prédit, en ce sens que l'on décale chaque bloc en fonction du vecteur de déplacement correspondant provenant de l'image antérieure.

3. Procédé selon l'une des revendications 1 à 2, caractérisé par la fabrication suivante du masque-objet du côté du récepteur:
- disposer la masque-objet de départ, par exemple masque-objet en forme d'image binaire présentant partout la valeur zéro,
- déterminer l'image d'erreur résiduelle en formant la différence entre l'image originale et l'image de prédiction,
- coder et transmettre l'image de prédiction sous forme de vecteurs de déplacement ainsi que l'erreur d'image résiduelle,
- après transmission, regrouper les zones de l'image sur lesquelles la valeur de l'image d'erreur résiduelle diminue lorsque l'on y modifie le masque-objet actuel, pour donner des segments d'erreur,
- fabriquer une première image de prédiction qui s'obtient lorsque l'on choisit la valeur du masque-objet (k) pour les segments d'erreur, par exemple "1", de façon à supposer mobile la portion d'image,
- fabriquer une seconde image de prédiction qui s'obtient lorsque l'on choisit la valeur du masque-objet (k) pour les segments d'erreur, par exemple "0", de façon à supposer immobile la portion d'image,
- former la différence entre l'image de prédiction codée et transmise et l'image d'erreur résiduelle et ceci pour la première et pour la seconde images de prédiction,
- comparer, segment d'erreur par segment d'erreur, les résultats fournis par ces formateurs de différence, en ce qui concerne la valeur de l'image d'erreur résiduelle,
- modifier, segment d'erreur par segment d'erreur, le masque-objet (k), c'est-à-dire ajouter au masque-objet (k) un segment d'erreur respectif ou enlever du masque-objet (k) le segment d'erreur respectif selon que la valeur de l'image d'erreur résiduelle diminuera alors.

4. Procédé selon la revendication 3, caractérisé par le fait que l'on ne procède à une modification du masque-objet (k) que si la diminution de la valeur de l'image d'erreur résiduelle se situe encore au-dessus de la valeur du bruit.

5. Procédé selon la revendication 3 ou 4, caractérisé par le fait que l'on enlève du masque-objet (k) les objets qui ne sont constitués que de peu d'éléments d'image.

6. Procédé selon l'une des revendications 1 à 5, caractérisé par le fait que l'on prépare en outre comme suit le masque-objet (k) à l'aide de l'information contenue dans une mémoire d'arrière-plan.:
- fabriquer une image en ce sens que sur chaque élément d'image on décale le contenu de la mémoire d'arrière-plan avec le même vecteur de déplacement que celui avec lequel on a fabriqué l'image de prédiction,
- comparer cette image avec l'image de prédiction et regrouper les zones semblables de l'image pour donner des segments,
- enlever des segments qui ne sont constitués que de peu d'éléments d'image,
- enlever les éléments d'image des segments dans lesquels le masque-objet (k) présente la valeur nulle,
- comparer, segment par segment, l'image codée transmise avec l'information de la mémoire d'arrière-plan et sortir du masque-objet (k) tous les segments semblables.

7. Application du procédé selon l'une des revendications 1 à 5, pour interpoler des images intermédiaires sautées en ce sens que l'on donne la valeur zéro à tous les vecteurs de déplacement pour l'information correspondant à l'arrière-plan immobile et que l'on amène à l'échelle correspondant à l'intervalle de temps qui s'écoule entre les images transmises et interpolées les vecteurs de déplacement qui se trouvent à l'intérieur du masque-objet (k) et que l'on fabrique des images intermédiaires interpolées comme des images de prédiction selon les caractéristiques e) à h) de la revendication 1.
